(19) Europäisches Patentamt
European Patent Office
Office européen des brevets

(11) EP 0 626 512 B1

(12) **FASCICULE DE BREVET EUROPEEN**

(45) Date de publication et mention
de la délivrance du brevet:
**07.05.1997 Bulletin 1997/19**

(51) Int Cl.⁶: **F02K 9/97**

(21) Numéro de dépôt: **94401178.2**

(22) Date de dépôt: **27.05.1994**

(54) **Tuyère de moteur-fusée à divergent échancré**

Raketendüse mit ausgezacktem Austrittkonus

Rocket nozzle with scalloped cone

(84) Etats contractants désignés:
**DE SE**

(30) Priorité: **28.05.1993 FR 9306453**

(43) Date de publication de la demande:
**30.11.1994 Bulletin 1994/48**

(73) Titulaire: **SOCIETE EUROPEENNE DE PROPULSION**
**92150 Suresnes (FR)**

(72) Inventeurs:
• **Vuillamy, Didier**
**F-76230 Quincampoix (FR)**

• **Baudart, Pierre-André**
**F-27200 Vernon (FR)**
• **Tiret, Etienne**
**F-27950 La Chapelle Reanville (FR)**
• **Beaurain, André**
**F-60230 Chambly (FR)**

(74) Mandataire: **Thévenet, Jean-Bruno et al**
**Cabinet Beau de Loménie**
**158, rue de l'Université**
**75340 Paris Cédex 07 (FR)**

(56) Documents cités:
FR-A- 2 021 803        FR-A- 2 457 390
FR-A- 2 503 794        FR-A- 2 618 488
US-A- 3 925 982

# Description

Domaine de l'invention

L'invention concerne les tuyères de moteurs-fusées et plus particulièrement les tuyères destinées à fonctionner dans un milieu extérieur à pression variable et comportant des moyens d'adaptation du divergent aux conditions ambiantes variables du vol.

Art antérieur

L'adaptation rigoureuse d'une tuyère de moteur-fusée utilisée pour propulser un premier étage de lanceur ne peut être obtenue, pour un régime donné, qu'à une seule altitude correspondant à une pression ambiante déterminée. Les tuyères sont généralement optimisées en fonction des performances globales de l'étage, ce qui conduit la plupart du temps à des tuyères sur-détendues dont la poussée sera maximale à une altitude relativement élevée dite d'adaptation. A l'altitude d'adaptation, la pression statique des gaz Pe dans la section de sortie de la tuyère devient égale à la pression ambiante Pa qui est relativement faible. L'altitude d'adaptation peut être située par exemple à une dizaine de kilomètres du sol. Pour toute la phase du vol depuis le sol jusqu'à l'altitude d'adaptation, la pression statique des gaz Pe dans la section de sortie de la tuyère est très sensiblement inférieure à la pression ambiante. Dans cette phase pendant laquelle la tuyère est sur-détendue et notamment au démarrage où la pression ambiante Pa correspond à la pression atmosphérique au niveau du sol, il existe un phénomène de décollement du jet par rapport à la paroi du divergent, qui limite le rapport de détente des gaz c'est-à-dire le rapport entre la pression Po dans la chambre de combustion et la pression statique des gaz Pe dans la section de sortie de la tuyère.

Afin d'éviter le phénomène de décollement de jet, on a déjà proposé par exemple dans le document FR-A-2 503 794 d'utiliser au démarrage et à basse altitude un divergent dont la section de sortie est réduite et qui est installé à l'intérieur d'un divergent présentant une plus grande section de sortie. Lorsque le moteur-fusée a atteint une altitude telle que le divergent de plus grande section de sortie peut fonctionner sans risque de décollement du jet, le divergent interne de section réduite est séparé et largué.

Un tel système d'adaptation d'une tuyère de moteur-fusée n'est pas entièrement satisfaisant car il implique un raccordement du petit divergent interne au niveau du col de la tuyère, qui est à une température très élevée, ce qui rend la réalisation relativement complexe. La réalisation de deux divergents complets emboîtés à la façon de poupées gigognes tend par ailleurs à augmenter la masse de l'ensemble.

Il a encore été proposé, notamment par les documents FR-A-2 568 316 et FR-A-2 457 390 de réaliser des tuyères à géométrie variable comprenant un premier divergent de relativement faible longueur et faible section de sortie utilisé dans une première phase de vol à partir du sol, et un ou plusieurs tronçons de divergent qui viennent se raccorder au premier divergent, en aval de celui-ci pour le prolonger en créant une section de sortie plus grande lorsque le moteur-fusée a atteint une certaine altitude pour laquelle la pression ambiante est réduite. De tels types de tuyères à divergent déployable permettent d'améliorer l'adaptation du moteur-fusée à différentes phases du vol, mais impliquent également un accroissement de la complexité de réalisation, du coût et de la masse embarquée et ne garantissent pas toujours une sécurité de fonctionnement suffisante compte tenu de la fragilité des mécanismes de déploiement et de la difficulté à réaliser un alignement correct des différents tronçons de divergent en présence des charges de recollement du jet sur les tronçons.

L'utilisation sur un moteur-fusée, d'un divergent déployable présente aussi, en dehors des problèmes liés au système de déploiement proprement dit, des contraintes au niveau de l'architecture moteur.

Il est encore connu, notamment par les documents US-A-3 925 982 ou FR-A-2 618 488, d'utiliser un divergent à rapport de section fixé, dont la section de sortie relativement importante optimise le fonctionnement en altitude dans un environnement à pression externe faible, et de mettre en oeuvre des moyens pour stabiliser au démarrage et dans une première phase de vol à faible altitude le décollement du jet de gaz par rapport à la paroi du divergent, à une distance déterminée de la section de sortie. On a toutefois jusqu'à présent proposé de stabiliser le décollement de jet essentiellement à l'aide d'une injection de fluide sous une forme d'anneau à travers la paroi du divergent. Les obligations d'utiliser un fluide et de commander son injection à l'intérieur du divergent accroissent la complexité du système et tendent à diminuer sa fiabilité.

Objet et description succincte de l'invention

La présente invention vise à remédier aux inconvénients précités et à permettre une bonne adaptation d'une tuyère de moteur-fusée à différentes conditions de vol depuis le sol jusqu'à une altitude où la pression ambiante est réduite, sans qu'il soit mis en oeuvre de pièce complémentaire au voisinage du col de la tuyère, ni de mécanisme de déploiement de pièces d'extension de divergent, ni de système d'injection de fluide.

L'invention vise à conférer à une tuyère de moteur-fusée un bon degré d'adaptabilité avec un rendement global satisfaisant à l'aide exclusivement de moyens statiques permettant de remédier aux problèmes liés au phénomène de décollement de jet.

Ces buts sont atteints grâce à une tuyère de moteur-fusée à divergent échancré, comprenant une partie convergente recevant les gaz produits dans une chambre de combustion, un col de tuyère de section réduite (So) et un divergent raccordé au col de tuyère et se terminant à sa partie aval par une section de sortie du jet de gaz (Se) définissant un rapport de section ($\varepsilon$= Se/So) élevé supérieur à environ 50,

caractérisé en ce que le divergent comprend dans sa partie aval un ensemble d'échancrures pratiquées longitudinalement à partir de l'extrémité aval et régulièrement réparties sur toute la périphérie du divergent, la largeur cumulée de l'ensemble des échancrures représentant en chaque section de l'ordre de 1 à 6% de la périphérie du divergent.

De préférence, la largeur cumulée de l'ensemble des échancrures représente en chaque section de l'ordre de 2 à 3% de la périphérie du divergent.

Le nombre des échancrures peut être compris entre 8 et 20 et de préférence entre 10 et 15.

Avantageusement, les pétales définis par les portions non échancrées de la partie aval du divergent présentent à leur extrémité aval une largeur comprise entre 50 et 80 cm.

D'une manière générale, les échancrures prennent naissance en amont ou au voisinage de la section du divergent au niveau de laquelle apparaîtrait au niveau du sol un décollement du jet pour un divergent de mêmes dimensions non échancré.

Selon une caractéristique particulière, la tuyère selon l'invention comprend des éléments de renforcement disposés à l'extérieur du divergent entre les échancrures et s'étendant longitudinalement de part et d'autre de la section du divergent au niveau de laquelle prennent naissance les échancrures.

Selon un premier mode de réalisation possible, la tuyère est réalisée en matériaux composites et les éléments de renforcement sont constitués par des nervures profilées formant une seule pièce avec le divergent.

Selon un autre mode de réalisation possible, la tuyère est réalisée en matériaux métalliques et les éléments de renforcement sont constitués par des nervures profilées en forme de fuseau rapportées sur le divergent métallique.

Les échancrures peuvent s'évaser progressivement en direction de l'extrémité aval du divergent.

L'invention, grâce aux échancrures ou fentes longitudinales pratiquées dans la partie aval du divergent, permet par des moyens purement statiques le décollement du jet de gaz chauds dans le divergent pendant la première phase de vol à basse altitude depuis le sol. Les échancrures régulièrement réparties à la périphérie du divergent permettent d'éviter une ligne de décollement du jet irrégulière et instable sans affecter le coefficient de poussée qui reste inchangé.

La limitation de la largeur cumulée des échancrures à la périphérie du divergent empêche que le débit le fuite de gaz chauds à travers les échancrures devienne gênant pour l'environnement du moteur-fusée extérieur de la tuyère. L'absence de pièce mobile garantit un fonctionnement stable et sûr et facilite la réalisation matérielle du divergent.

## Brève description des dessins

D'autres caractéristiques et avantages de l'invention ressortiront de la description suivante de modes particuliers de réalisation donnés à titre d'exemples, en référence aux dessins annexés sur lesquels :

- la figure 1 est une demi-vue schématique en perspective montrant le principe de réalisation d'échancrures dans une tuyère de moteur-fusée selon l'invention,
- la figure 2 montre une vue partielle en perspective d'une portion de la partie aval d'un divergent de tuyère selon l'invention réalisé en matériaux composites,
- la figure 3 est une vue en coupe selon la ligne III-III de la figure 2,
- la figure 4 montre une vue partielle en perspective avec arrachement, d'une portion de la partie aval d'un divergent de tuyère selon l'invention réalisé en matériaux métalliques,
- la figure 5 est une vue en perspective de l'ensemble d'un divergent de tuyère réalisé selon le mode de réalisation de la figure 4, et
- les figures 6 à 8 montrent différentes configurations d'échancrures pouvant être réalisées dans un divergent de tuyère de moteur-fusée conformément à l'invention.

## Description détaillée de modes particuliers de réalisation de l'invention

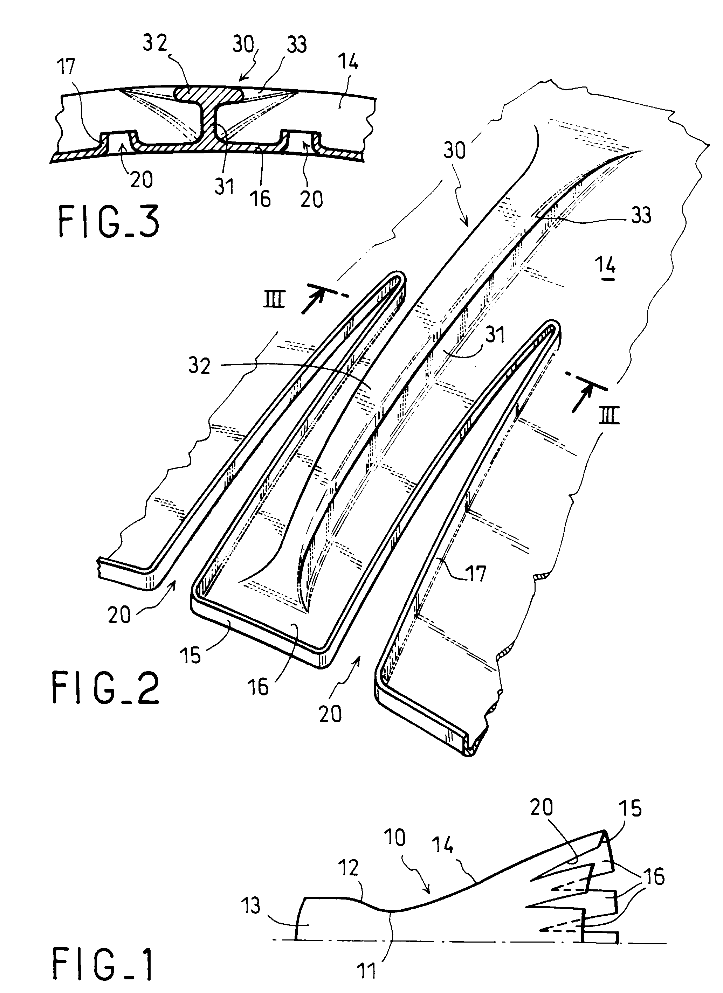

La figure 1 montre la forme générale d'une tuyère 10 de moteur-fusée comprenant une partie convergente amont 12 recevant les gaz chauds produits dans une chambre de combustion 13, un col de tuyère 11, et un divergent 14 qui assure la détente des gaz chauds en aval du col 11 et leur éjection au niveau de l'extrémité aval 15 du divergent qui présente une section de sortie Se.

Le rapport de section E entre la section de sortie Se du divergent et la section So de passage des gaz chauds au niveau du col de tuyère 11 définit un taux de détente. Le rapport de détente de la tuyère 10 est en effet défini par le rapport entre la pression Po dans la chambre de combustion et la pression statique des gaz Pe dans la section de sortie de la tuyère, et le rapport de détente dépend directement du rapport de section $\varepsilon$.

On cherche en général à avoir un rapport de détente, donc un rapport de section $\varepsilon$ le plus grand possible, afin d'obtenir une poussée importante.

Comme cela a déjà été indiqué, la poussée n'est cependant maximale que si la tuyère est adaptée, c'est-à-dire si la pression statique des gaz Pe dans la section de sortie de la tuyère est égale à la pression du milieu ambiant Pa.

Si la tuyère est adaptée pour un fonctionnement à haute altitude, avec une pression ambiante Pa très faible, la tuyère est sur-détendue au niveau du sol où la pression statique Pe des gaz dans la section de sortie de la tuyère est très inférieure à la pression ambiante Pa qui est alors égale à 1 bar, et il se produit avec les divergents traditionnels un phénomène de décollement du jet des gaz chauds par rapport à la paroi du divergent 14. Ce phénomène de décollement du jet, par les instabilités des charges mécaniques qu'il provoque sur le divergent, peut conduire à une destruction du divergent.

C'est pourquoi on a déjà proposé soit de mettre en oeuvre des moyens assez complexes pour stabiliser le décollement du jet à l'aide de systèmes d'injection de gaz, soit plus généralement de limiter la longueur du divergent et sa section de sortie afin d'éviter à basse altitude la phénomène de décollement du jet. Ceci se traduit par une perte de poussée à haute altitude ou par l'obligation d'adjoindre à haute altitude des systèmes d'extension de tuyère qui compliquent fortement la structure de l'ensemble et la fragilisent.

On considérera à titre d'exemple une tuyère de moteur fusée classique d'un premier étage de lanceur, dont le rapport de section est limité à $\varepsilon=45$ afin de garantir qu'au sol ou à très basse altitude aucun décollement du jet ne peut se produire. Ceci correspond à une tuyère qui est adaptée à une pression extérieure de l'ordre de 0,4 bar mais est sous-détendue pour des pressions extérieures inférieures à 0,4bar, c'est-à-dire à des altitudes supérieures à 8 à 10km. La poussée reste ainsi limitée pour toutes les phases de vol à une altitude au-delà d'environ 10km.

L'invention offre un moyen simple d'améliorer l'adaptation d'une tuyère dans une plage de fonctionnement plus étendue en stabilisant le phénomène de décollement de jet à basse altitude et en autorisant une géométrie de tuyère présentant un rapport de section élevé assurant une bonne adaptation et par suite un gain de poussée aux altitudes élevées, au-delà de 10km environ, où la pression ambiante est réduite.

Pour cela, des échancrures longitudinale 20 sont pratiquées dans la partie aval du divergent 14 à partir de l'extrémité aval 15 et sont régulièrement réparties sur toute la périphérie du divergent. Les portions non échancrées de la partie aval du divergent 14 constituent des pétales 16 qui prolongent la partie amont non échancrée du divergent 14.

Les échancrures ou fentes 20 prennent naissance en amont ou au voisinage de la section du divergent au niveau de laquelle apparaîtrait au niveau du sol un décollement du jet pour un divergent non échancré. Si le décollement de jet, compte tenu des caractéristiques de la tuyère est par exemple susceptible d'apparaître au niveau d'une section $S_1$ du divergent définissant un rapport de section ($\varepsilon_1=S_1/So$) de l'ordre de 45, les échancrures 20 pourront prendre naissance soit au niveau de la section $S_1$, soit un peu en amont de celle-ci par exemple au niveau d'une section $S_2$ du divergent définissant un rapport de section ($\varepsilon_2=S_2/So$) de l'ordre de 25 pouvant correspondre à une pression dans le divergent de l'ordre de 1 bar, ce qui améliore le fonctionnement au niveau du sol.

Les échancrures 20 pratiquées dans la partie aval du divergent forcent et stabilisent le décollement du jet à basse altitude et permettent ainsi de définir un divergent 14 présentant un rapport de section ($\varepsilon=Se/So$) plus élevé, par exemple de l'ordre de 80 à 100, que celui qui aurait été possible sans moyen de stabilisation du décollement de jet. Au total, la tuyère selon l'invention présente une bonne adaptation moyenne du jet au cours du vol et apporte des gains de poussée de l'ordre de plusieurs pour cents (par exemple de 3 à 7%) pour des altitudes supérieures à 10km par rapport à des tuyères conventionnelles de section de sortie limitée pour éviter un décollement de jet au démarrage.

Le degré d'ouverture des échancrures 20 ne joue pas sur le gain de poussée. Toutefois, afin de réduire à haute altitude les débits de fuite de gaz chauds qui sont sensiblement proportionnels au degré d'ouverture des échancrures 20, il convient de limiter la largeur des échancrures à un faible pourcentage de la périphérie du divergent.

Ainsi, il convient que la largeur cumulée de l'ensemble des échancrures 20 ne représente en chaque section du divergent, qu'un pourcentage inférieur à 10% par exemple de l'ordre de 1 à 6% et de préférence de 2 à 3% de la périphérie du divergent 14.

Le pourcentage de débit de fuite des gaz chauds à travers les échancrures à haute altitude peut être évalué à 2% lorsque les échancrures 20 ne représentant que 1% de la périphérie du divergent, et à 12% lorsque les échancrures 20 représentent 10% de la périphérie du divergent.

Dans la mesure où 2 à 3% d'échancrure sur la circonférence du divergent 14 suffisent pour obtenir une bonne stabilité du phénomène de décollement de jet, si les échancrures sont régulièrement réparties, il est préférable de retenir ces valeurs pour lesquelles le débit de fuite des gaz chauds reste négligeable.

Le nombre et la forme des échancrures 20 peuvent être adaptés en fonction des besoins.

Le nombre d'échancrures 20 peut normalement être compris entre 6 et 15 et de préférence compris entre 8 et 12.

Les pétales 16 définis par les portions non échancrées de la partie aval du divergent 14 peuvent présenter à leur extrémité aval une largeur comprise par exemple entre 50 et 80cm.

La longueur des échancrures 20 dépend de la taille du divergent 14 et de la localisation des extrémités amont des échancrures 20 par rapport à l'emplacement théorique de décollement du jet. Cette longueur peut être par exemple de l'ordre de 70cm à 1,20m.

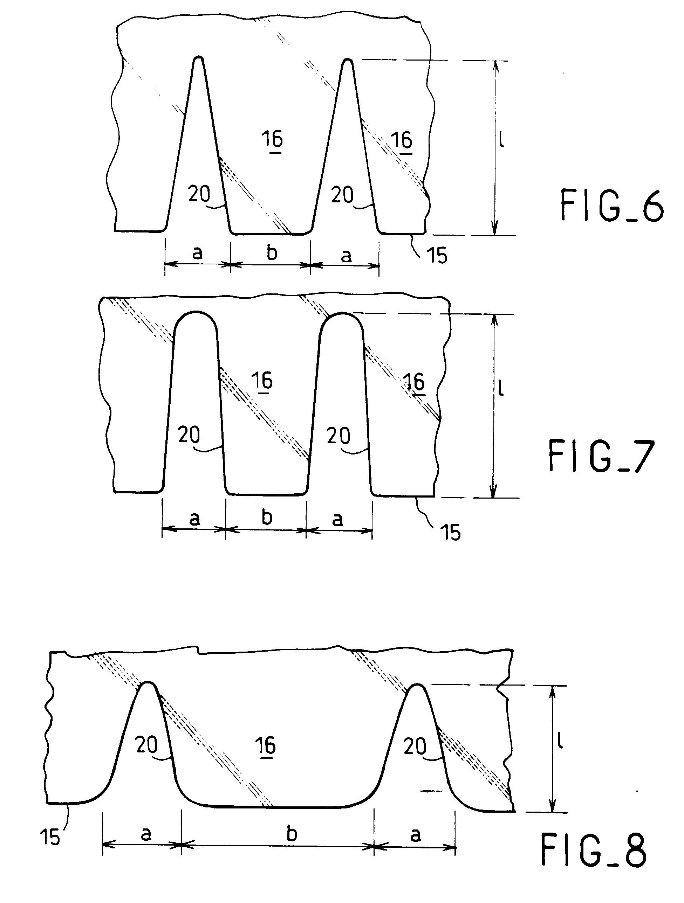

Les figures 6 à 8 montrent différents exemples de configuration possible pour les échancrures 20. On a indiqué sur les figures 6 à 8 la largeur _a_ de chaque échancrure 20 au niveau de l'extrémité aval 15 du divergent ainsi que la largeur _b_ des pétales 16 situés entre les échancrures 20, et la longueur l des échancrures 20. Les figures 6 à 9 ne sont cependant pas représentées à l'échelle et en règle générale, la longueur l des échancrures 20 et la largeur b des pétales 16 sont très supérieures à la largeur a des échancrures 20 qui peut être par exemple de l'ordre de quelques millimètres.

Les échancrures 20 peuvent s'évaser progressivement en direction de l'extrémité aval 15 du divergent (figures 6,7,8).

Avantageusement, comme cela est représenté sur les figures 2,3 et 4, les échancrures 20 sont rigidifiées en étant délimitées sur la face externe du divergent 14 par un rebord 17 saillant vers l'extérieur.

Selon une caractéristique particulière de l'invention, des éléments de renforcement 30, 40 des pétales 16 (figures 2 à 5) sont disposés à l'extérieur du divergent 14 entre les échancrures 20. Les éléments de renforcement 30,40 s'étendent longitudinalement de part et d'autre de la section du divergent au niveau de laquelle prennent naissance les échancrures 20.

Les figures 2 et 3 montrent un exemple de divergent 14 en matériaux composites, par exemple en carbone à matrice carbone.

Dans ce cas, les éléments de renforcement 30 peuvent être constitués par des nervures profilées venues d'une seule pièce avec le divergent 14. La figure 3 montre un exemple de nervure à profil en I avec une partie 31 perpendiculaire à la face externe du divergent, une partie horizontale supérieure 32 et une partie amont 33 évasée raccordée de façon progressive à la partie amont du divergent 14. D'autres formes de nervures sont toutefois possibles.

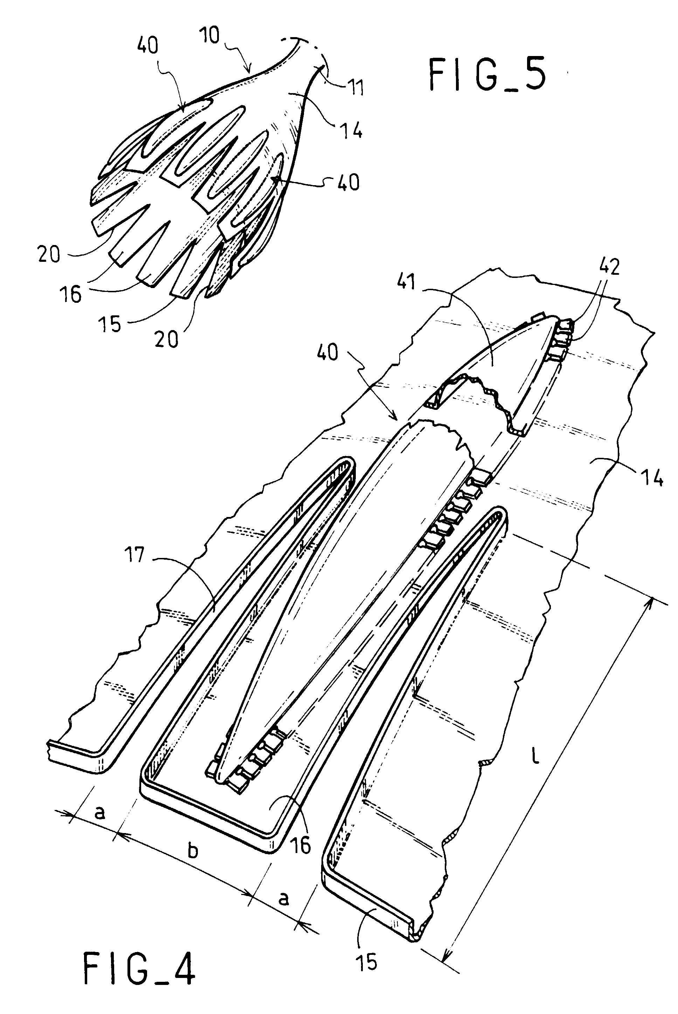

Les figures 4 et 5 montrent un exemple de divergent 14 métallique sur lequel sont rapportés des éléments de renforcement 40 en forme de fuseau avec un corps 41 présentant une section par exemple semi-circulaire et un ensemble de pattes de fixation 42 qui peuvent être par exemple soudées sur la face externe du divergent 14. La présence d'une multiplicité de pattes de fixation donne de la souplesse à la liaison et permet de répartir les contraintes dues aux dilatations en fonctionnement.

Il ressort de l'ensemble de la description précédente qu'une tuyère selon la présente invention présente une grande simplicité et permet d'obtenir un bon rendement sans entraîner d'augmentation significative de la masse totale.

L'invention permet d'optimiser le divergent pour un fonctionnement à haute altitude grâce à la section de sortie importante.

Le champ de pression est maintenu en regard des fentes 20 et dans la mesure où celles-ci sont de largeur réduite, les pertes de débit de gaz chauds à travers les fentes 20 restent faibles.

Au voisinage du sol, la pression atmosphérique agit sur la couche limite à travers les fentes 20 et il y a décollement du jet à la naissance des fentes 20. Ce décollement de jet, dans la mesure où il est contrôlé et maitrisé par la présence des fentes 20 régulièrement réparties, permet d'optimiser le rendement sans mettre en danger l'intégrité du divergent ou provoquer des instabilités.

On notera qu'il existe diverses méthodes classiques de prévision du lieu de décollement de jet dans une tuyère axisymétrique et que la difficulté consiste non pas à prévoir le lieu de décollement mais à maîtriser le décollement afin d'empêcher des instabilités d'apparaître. La mise en oeuvre de fentes ou échancrures 20 offre un tel moyen pour stabiliser simplement et efficacement le décollement du jet.

Les méthodes de détermination du lieu de décollement de jet utilisent des critères qui relient les propriétés de l'écoulement en amont du décollement à des caractéristiques de l'écoulement en aval du décollement. Une méthode habituelle consiste à calculer l'écoulement dans la tuyère en fluide non visqueux, pour déterminer les caractéristiques de l'écoulement près de la paroi, puis à appliquer l'un des critères de décollement.

A titre d'exemple, si $Mo$ représente le nombre de Mach de l'écoulement avant le décollement et $P_2$ et $P_1$ représentent les pressions statiques après et avant le décollement, on peut choisir les critères de décollement suivants :

critère de Zukoski

$$\frac{P_2}{P_1} = 1 + \frac{Mo}{2}$$

critère de Summerfield

$$\frac{P_1}{P_2} = (1{,}88 Mo - 1)^{-0{,}64}$$

La pression statique $P_2$ en aval du décollement peut être prise égale à la pression extérieure.

En première approximation le nombre de Mach $Mo$ peut être choisi égal à 3.

On a ainsi la condition

$$\frac{P_1}{P_2} \simeq 0{,}4.$$

Au voisinage du sol, quand la pression extérieure $P_2$ est voisine de 1 bar, le décollement se produit ainsi lorsque la pression statique $P_1$ de l'écoulement du gaz éjecté atteint ou descend en dessous d'environ 0,4 bar.

**Revendications**

1. Tuyère de moteur-fusée à divergent échancré, comprenant une partie convergente (12) recevant les gaz produits dans une chambre de combustion (13), un col de tuyère (11) de section réduite (So) et un divergent (14) raccordé au col de tuyère (11) et se terminant à sa partie aval (15) par une section de sortie des gaz (Se) définissant un rapport de section (ε = Se/So) élevé supérieur à environ 50,

caractérisée en ce que le divergent (14) comprend dans sa partie aval un ensemble d'échancrures (20) pratiquées longitudinalement à partir de l'extrémité aval (15) et régulièrement réparties sur toute la périphérie du divergent, la largeur cumulée de l'ensemble des échancrures (20) représentant en chaque section de l'ordre de 1 à 6% de la périphérie du divergent (14).

2. Tuyère selon la revendication 1, caractérisée en ce que la largeur cumulée de l'ensemble des échancrures (20) représente en chaque section de l'ordre de 2 à 3% de la périphérie du divergent.

3. Tuyère selon la revendication 1 ou la revendication 2, caractérisée en ce que le nombre d'échancrures longitudinales (20) est compris entre 8 et 20.

4. Tuyère selon la revendication 3, caractérisée en ce que le nombre d'échancrures longitudinales (20) est compris entre 10 et 15.

5. Tuyère selon l'une quelconque des revendications 1 à 4, caractérisée en ce que les pétales (16) définis par les portions non échancrées de la partie aval du divergent (14) présentent à leur extrémité aval une largeur comprise entre 50 et 80 cm.

6. Tuyère selon l'une quelconque des revendications 1 à 5, caractérisée en ce que les échancrures (20) prennent naissance en amont ou au voisinage de la section du divergent (14) au niveau de laquelle apparaîtrait au niveau du sol un décollement du jet pour un divergent de mêmes dimensions non échancré.

7. Tuyère selon l'une quelconque des revendications 1 à 6, caractérisée en ce qu'elle comprend des éléments de renforcement (30,40) disposés à l'extérieur du divergent (14) entre les échancrures (20) et s'étendant longitudinalement de part et d'autre de la section du divergent au niveau de laquelle prennent naissance les échancrures (20).

8. Tuyère selon la revendication 7, caractérisée en ce qu'elle est réalisée en matériaux composites et en ce que les éléments de renforcement (30) sont constitués par des nervures profilées formant une seule pièce avec le divergent (14).

9. Tuyère selon la revendication 7, caractérisée en ce qu'elle est réalisée en matériaux métalliques et en ce que les éléments de renforcement (40) sont constitués par des nervures profilées en forme de fuseau rapportées sur le divergent métallique (14).

10. Tuyère selon l'une quelconque des revendications 1 à 9, caractérisée en ce que les échancrures (20) s'évasent progressivement en direction de l'extrémité aval (15) du divergent (14).

11. Tuyère selon l'une quelconque des revendications 1 à 9, caractérisée en ce que les échancrures (20) présentent une partie terminale aval plus étroite que le corps de l'échancrure.

12. Tuyère selon l'une quelconque des revendications 1 à 11, caractérisée en ce que les échancrures (20) sont rigidifiées en étant délimitées sur la face externe du divergent par un rebord (17) saillant vers l'extérieur.

## Patentansprüche

1. Raketendüse mit eingeschnittenem Austrittskonus, mit einem konvergenten Bereich (12), der die in einer Brennkammer (13) erzeugten Gase aufnimmt, einem Düsenhals (11) mit verringertem Querschnitt (So) und einem an den Düsenhals (11) angeschlossenen Austrittskonus (14), der in seinem stromabwärtigen Bereich (15) mit einem Gasaustrittsquerschnitt (Se) endet, der ein hohes Querschnittsverhältnis (ε = Se/So) von größer als etwa 50 definiert, dadurch gekennzeichnet, daß
der Austrittskonus (14) in seinem stromabwärtigen Bereich eine Anordnung von ausgehend von dem stromabwärtigen Ende (15) in Längsrichtung gebildeten und gleichmäßig auf dem gesamten Umfang des Austrittskonus verteilte Einschnitte (20) umfaßt, wobei die kumulierte Breite der Gesamtheit der Einschnitte (20) an jedem Querschnitt in der Größenordnung von 1 bis 6 % des Umfangs des Austrittskonus (14) darstellt.

2. Düse nach Anspruch 1, dadurch gekennzeichnet, daß die kumulierte Breite der Gesamtheit der Einschnitte (20) an jedem Querschnitt in der Größenordnung von 2 bis 3 % des Umfangs des Austrittskonus darstellt.

3. Düse nach Anspruch 1 oder Anspruch 2, dadurch gekennzeichnet, daß die Zahl von longitudinalen Einschnitten (20) zwischen 8 und 20 liegt.

4. Düse nach Anspruch 3, dadurch gekennzeichnet, daß die Zahl von longitudinalen Einschnitten (20) zwischen 10 und 15 liegt.

5. Düse nach einem der Ansprüche 1 bis 4, dadurch gekennzeichnet, daß die durch die nicht eingeschnittenen Abschnitte des stromabwärtigen Bereichs des Austrittskonus (14) definierten Lappen (16) an ihrem stromabwärtigen Ende eine Breite von zwischen 50 und 80 cm aufweisen.

6. Düse nach einem der Ansprüche 1 bis 5, dadurch gekennzeichnet, daß die Einschnitte (20) stromaufwärts von demjenigen Querschnitt des Austrittskonus (14), in dessen Höhe in Bodenhöhe eine Strahlablösung bei einer nicht eingeschnittenen Düse gleicher Ausmaße auftreten würde, oder in der Nähe dieses Querschnitts beginnen.

7. Düse nach einem der Ansprüche 1 bis 6, dadurch gekennzeichnet, daß sie Verstärkungselemente (30, 40) umfaßt, die außerhalb des Austrittskonus (14) zwischen den Einschnitten (20) angeordnet sind und sich in Längsrichtung auf beiden Seiten desjenigen Querschnitts des Konus erstrecken, an dem die Einschnitte (20) beginnen.

8. Düse nach Anspruch 7, dadurch gekennzeichnet, daß sie aus Verbundmaterialien hergestellt ist und daß die Verstärkungselemente (30) durch einstückig mit dem Austrittskonus (14) ausgebildete erhabene Rippen gebildet sind.

9. Düse nach Anspruch 7, dadurch gekennzeichnet, daß sie aus metallischen Materialien hergestellt ist und daß die Verstärkungselemente (40) aus an den metallischen Austrittskonus (14) angefügten spindelförmigen erhabenen Rippen gebildet sind.

10. Düse nach einem der Ansprüche 1 bis 9, dadurch gekennzeichnet, daß die Einschnitte (20) sich zum stromabwärtigen Ende (15) des Austrittskonus (14) hin fortschreitend verbreitern.

11. Düse nach einem der Ansprüche 1 bis 9, dadurch gekennzeichnet, daß die Einschnitte (20) einen stromabwärtigen Endbereich aufweisen, der schmaler als der Körper des Einschnitts ist.

12. Düse nach einem der Ansprüche 1 bis 11, dadurch gekennzeichnet, daß die Einschnitte (20) dadurch versteift sind, daß sie an der Außenseite des Austrittskonus durch eine nach außen vorstehende Krempe (17) begrenzt sind.

## Claims

1. A rocket engine nozzle having a notched diverging portion, the nozzle comprising a converging portion (12) receiving the gases produced in a combustion chamber (13), a nozzle throat (11) of small section [So], and a diverging portion (14) connected to the nozzle throat (11) and terminating at its downstream end (15) in a gas outlet section [Se] defining a high section ratio [$\varepsilon = Se/So$] greater than about 50, characterized in that the diverging portion (14) includes a set of notches (20) in its downstream end running longitudinally from its downstream end (15) and regularly spaced apart around the entire periphery of the diverging portion, the total width of the set of notches (20) constituting in each section about 1% to 6% of the periphery of the diverging portion (14).

2. The nozzle according to claim 1, characterized in that the total width of the set of notches (20) in each section represents about 2% to 3% of the periphery of the diverging portion.

3. The nozzle according to claim 1 or claim 2, characterized in that the number of longitudinal notches (20) lies in the range 8 to 20.

4. The nozzle according to claim 3, characterized in that the number of longitudinal notches (20) lies in the range 10 to 15.

5. The nozzle according to any one of claims 1 to 4, characterized in that the lobes (16) defined by the non-notched portions of the downstream areas of the diverging portion (14) have a downstream end width lying in the range 50 cm to 80 cm.

6. The nozzle according to any one of claims 1 to 5, characterized in that the notches (20) begin upstream from or in the vicinity of the section of the diverging portion (14) at which the jet separates at ground level in a diverging portion having the same dimensions but no notches.

7. The nozzle according to any one of claims 1 to 6, characterized in that it includes reinforcing elements (30, 40) disposed on the outside of the diverging portion (14), between the notches (20), and extending longitudinally on either side of the section of the diverging portion at which the notches (20) begin.

8. The nozzle according to claim 7, characterized in that it is made of composite materials, and in that the reinforcing elements (30) are constituted by shaped ribs integrally formed with the diverging portion (14).

9. The nozzle according to claim 7, characterized in that it is made of metal materials and in that the reinforcing elements (40) are constituted by pod-shaped ribs applied to the metal diverging portion (14).

10. The nozzle according to any one of claims 1 to 9, characterized in that the notches (20) flare progressively towards the downstream end (15) of the diverging portion (14).

11. The nozzle according to any one of claims 1 to 9, characterized in that the notches (20) have downstream terminal portions that are narrower than the bodies of the notches.

12. The nozzle according to any one of claims 1 to 11, characterized in that the notches (20) are stiffened by being defined on the outside face of the diverging portion by an outwardly projecting rim (17).

EP 0 626 512 B1

FIG_3

FIG_2

FIG_1

9

FIG_5

FIG_4

FIG_6

FIG_7

FIG_8